# EUROPEAN PATENT SPECIFICATION

(11) **EP 4 309 819 B1**
(45) Date of publication and mention of the grant of the patent: **29.10.2025**
(21) Application number: 22185463.1
(22) Date of filing: 18.07.2022
(51) Int. Cl.: G05B 19/404, B21D 7/00, B21D 7/12

(54) **TUBE BENDING METHOD AND TUBE BENDING SYSTEM**
ROHRBIEGEVERFAHREN UND ROHRBIEGESYSTEM
PROCÉDÉ DE CINTRAGE DE TUBE ET SYSTÈME DE CINTRAGE DE TUBE

(43) Date of publication of application: 24.01.2024
(73) Proprietor: Hexagon Technology Center GmbH, 9435 Heerbrugg (CH)
(72) Inventor: MENTL, Katrin, CH-9437 Marbach (CH); BADE, Nicholas, 9443 Widnau (CH); REIMANN, Bernd, CH-9435 Heerbrugg (CH); LINZ, Christian, 38159 Vechelde (DE); ZUR MÜHLEN, Miriam, 38104 Braunschweig (DE)
(74) Representative: Kaminski Harmann

(56) References cited:
- CN-A- 113 609 719
- KR-A- 20200 066 851
- CHANG SUN ET AL: "Digital-twin-enhanced metal tube bending forming real-time prediction method based on Multi-source-input MTL", ARXIV.ORG, CORNELL UNIVERSITY LIBRARY, 201 OLIN LIBRARY CORNELL UNIVERSITY ITHACA, NY 14853, 3 July 2022 (2022-07-03), XP091262509
- SUN CHANG ET AL: "Toward axial accuracy prediction and optimization of metal tube bending forming: A novel GRU-integrated Pb-NSGA-III optimization framework", ENGINEERING APPLICATIONS OF ARTIFICIAL INTELLIGENCE, PINERIDGE PRESS, SWANSEA, GB, vol. 114, 16 July 2022 (2022-07-16), XP087140894, ISSN: 0952-1976, [retrieved on 20220716], DOI: 10.1016/J.ENGAPPAI.2022.105193

## Description

The present invention relates to tube bending by a tube bending machine, wherein values of input parameters of the tube bending machine are determined as a function of a mapping of bending parameters defining a target tube bending geometry to the input parameters.

Bent tubes are used in many machines and instruments, e.g. as automotive parts, plumbing lines, or parts of air conditioning systems. By way of example, bent tubes or pipes are used to guide fluids or gases. On the other hand, bent tubes may be used for supporting or providing a specific mechanical structure, e.g. as handles or furniture frames.

Tubes can be formed purely mechanically, which is often referred to as cold bending, and/or by applying heat, which is often referred to as hot bending. Typically, one part of the tube is fixed and a rotating die, roller, or press is used to shape the tube into a target tube bending geometry by exerting tensile and/or compressive forces onto the tube. The outcome of the bending process depends on different physical effects such as springback and degradation as well as material-specific or geometry-specific behavior.

In the prior art, it often takes a certain number of trials until a machine type is properly configured to bend a tube of a certain material and structure within the specified geometry and tolerances. When the difference between desired and actual geometry is not within tolerance the machine parameters need to be adapted such that the next tube's actual geometry is closer to the desired geometry. This potentially iterative process is either done manually by the operator using his intuition based on experience or a linear process, which extrapolates the current deviation and takes into account the inverse error to provide an allowance on top to the previous machine parameters.

Tube features such as inner and outer diameter of the tube as well as further material properties such as Young's modulus or alloy specification can strongly affect the required bending process. In addition, also machine properties like the radius of the bend die have significant influence on the process. Also, the state of the bending machine itself is of importance: The machine degrades over time, eventually parts are exchanged, thus heavily impacting the performance of the machine. Usually, the bend die groove and the clamp groove show wear effects, resulting in inaccuracies in the bending process.

In order to reduce the number of tests, complex analytical models are used to take effects such as springback into account at an early stage. However, such modelling is often difficult for providing good settings over a variety of different tube materials and tube characteristics (tube radius, wall thickness, etc.). Another approach is to try to measure the tube bending geometry during the bending process, e.g. by optical measurements, and to apply real time corrections based thereof. However, deriving suitable correction measures is often still highly dependent on analytical techniques/models and is still difficult to provide for over a range of many different tube materials and tube characteristics.

KR 2020 0066851 A (POSCO [KR]) 11 June 2020 (2020-06-11) discloses using a neural network control model for controlling the bending process. Actual measured data is fed back to the neural network for training.

It is therefore an object of the present invention to provide a method and a system for tube bending, which overcomes deficiencies of the prior art.

A particular object is to reduce the number of trials until the correct tube bending geometry is achieved and hence to reduce time, effort and waste parts.

A further object is to provide efficient tube bending over an increased range of tube materials and target tube bending geometries.

The invention is defined by the appended independent claims. Optional aspects of the invention are provided in the appended dependent claims.

The invention relates to a method for determining a mapping of bending parameters defining a target tube bending geometry of a tube bending process to tube bending machine input parameters defining tube bending machine processing steps, so as to achieve the target tube bending geometry (within required tolerance boundaries).

By way of example, the target tube bending geometry is defined by a series of bending elements, each described with so-called PBRR parameters referred to as Push, Bend, Rotate, and Radius. The typical units are [mm], [rad], [rad] and [mm]. These PBRR parameters describe the manufacturing process, and are indicative of a distance between two bending elements (or a distance between a process starting point to a bending element, e.g. in case only one bending element is generated by the tube bending process), an angle of bend of a respective bending element, a bending radius of a respective bending element, and an orientation of a respective bending element with respect to another bending element (e.g. a following bending element). For tubes with non-circular cross-sections, e.g. rounded rectangular cross sections, the PBRR model needs to be extended, e.g. by additional parameters describing torsion on straight sections of the tube.

The method comprises a step of generating tube bending machine processing data underlying a reference tube bending process. This reference tube bending process can be a currently ongoing tube bending process by the tube bending machine or a tube bending process previously executed by the tube bending machine. The tube bending machine processing data comprise target values of the bending parameters for the reference tube bending process and corresponding used values for the input parameters.

The method further comprises a step of using 3D measurement data of a measured tube bending geometry of a tube part resulting from carrying out the reference tube bending process for determining a 3D model of the tube part. For example, the 3D measurement data are 3D point cloud data.

By way of example, the 3D measurement data originate from an optical coordinate measuring device, e.g. a camera-based 3D measuring device configured to generate data for photogrammetric analysis. For example, the 3D measurement data are provided by an all-in-one turnkey measurement cell specially developed for the efficient quality control of bent tubes and wires, e.g. by the TubeInspect apparatus and system of the company Hexagon. One benefit of using optical coordinate measuring device data lies in the quick provision of specific error parameters in case the bent tube is out of specification (out of the defined target tolerance) instead of simply a "yes or no" answer regarding the achievement of the target specification, e.g. as it is often the case when using a mechanical gauge to check part tolerances. Alternatively, or in addition, the 3D measurement data are provided by measurement devices such as the so-called Absolute Arm of the company Hexagon: The so-called ROMER Absolute Arm is a portable CMM coordinate measurement machine (CMM) with a probe for tactile point-by-point measurements and/or for laser-based scanning of a surface. The traditional fixed reference measurement form can be used as well for quality monitoring purposes. However, for such traditional fixed reference measurement forms the output is a binary result, i.e. the output provides information whether the tube is in or out of tolerance but no actual shape information is provided.

The method further comprises determining measured values of the bending parameters of the tube part from the 3D model (e.g. by automated detection) and carrying out a comparison between the measured and the target values of the bending parameters with regard to achieving the target values within a defined target tolerance. The comparison is taken into account by a training step for training a mapping model. The mapping model provides a mapping of the input parameters to the bending parameters, wherein the mapping model is trained by a machine learning process, which takes into account the comparison. For example, the machine learning process is also configured for providing the comparison.

In other words, the mapping model is "fitted" to the tube bending machine processing data and the comparison by machine learning, wherein the mapping model is configured to provide a machine learning dependency of the input parameters from the bending parameters. By way of example, in order to establish the machine learning dependency the mapping model is trained in a supervised fashion by feeding the training process both with bending parameters and further features relating to at least one of material (e.g. based on measured properties as provided by the material supplier and/or as qualified in an incoming inspection), geometry (e.g. a geometry-specific key performance indicator, KPI), machine state (e.g. failure history / wear parts), and environment condition (e.g. temperature and humidity conditions of the surrounding environment) as input and machining parameters as corresponding targets / labels. The mapping model is trained to predict continuous values of machining input parameters and thus solves a regression problem. Various supervised machine learning regression models exist such as multiple ridge regression, random forest regression, support vector machine regression and neural network regression, among others.

In one embodiment, the training of the mapping model is carried out in a reinforcement learning manner, e.g. by rewarding the finding of suitable values for the input parameters on the first try - e.g. wherein values being regarded suitable in case the defined target tolerance is met or achieved with certain margin - and punishing the finding of appropriate values for the input parameters after more than one iteration. The reinforcement learning agent may thus be guided to predict machining input parameters after as few iterations as possible, while at the same time taking into account that the environment changes through the actions taken, e.g. taking into account machine wear. For example, such a training is carried out in a simulation environment where the entire bending process is depicted / represented accurately.

In particular, it is beneficial when the selected machine learning process provides the capability for transfer learning in order to create point solutions for specific tube geometries and / or machines. Thus, a neural network regression model may be beneficial as it provides this capability / flexibility by allowing for a fine tuning / retraining of the representation of only the final network layers / weights while keeping the initial layers / parameters from the pre-training on the large more general dataset. For example, the first layers of a neural network represent basic and general abstractions of the data and are unchanged after pre-training on a large comprehensive training dataset, while the last layer(s) are retrained / finetuned to specific input data.

In a further embodiment, the tube bending machine processing data comprise tube information on tube material and tube geometry, e.g. information on an inner and outer tube diameter, of the tube part, and the machine learning process is configured to take into account the tube information for the training of the mapping model.

In a further embodiment, the machine learning process is configured to provide the training of the mapping model by taking into account the tube information by estimating continuous machining parameters of the reference tube bending process, for which the tube information is fed into a regression part of the machine learning process. By way of example, the training of the mapping model is carried out in a supervised fashion by presenting both inputs and outputs of the regression part.

The training of the mapping model may include generating the mapping model from scratch or the training of the mapping model may include training (improving) a previously generated mapping model.

By way of example, in one embodiment the method implements a so-called "one-shot-learning" approach. In such a method a model is deployed without any pre-training and it is learned live on the machine with every sample (sample is a tube to be bent by the machine). For such-one-shot-learning it is not necessary to have stored tube bending machine processing data of previously executed tube bending processes. It can be sufficient to only store the trained (updated) mapping model.

In a further embodiment, the method further includes storing a history of tube bending machine processing data from previous tube bending processes executed over a period of time. The history comprises previous values of the bending parameters for the previous tube bending processes and corresponding previous values of the input parameters used to achieve respective target tube bending geometries corresponding to the previous values of the bending parameters. Furthermore, the history comprises comparison information between the previous values of the bending parameters and measured actual values of the bending parameters resulting from the previous tube bending processes with regard to achieving the previous values of the bending parameters within defined target tolerances. The history is then used for the training of the mapping model, wherein the machine learning process is configured to take into account the history to train the mapping model.

In a further embodiment, the method further comprises analyzing the tube bending machine processing data for providing a confidence metric, which describes how well the tube bending machine processing data fit a training data distribution underlying the mapping model, e.g. a training data distribution underlying previous training of the mapping model. The machine learning process is further configured to provide a predicted correction value for at least one of the parameters (e.g. one of the input parameters or one of the bending parameters) and a corresponding predicted confidence information of the predicted correction value. The steps of the using of the 3D measurement data for the determining of the 3D model of the tube part, the determining of the measured values of the bending parameters and the carrying out of the comparison between the measured and the target values of the bending parameters, and the training of the mapping model are then carried out as a function of a threshold criterion taking into account the confidence metric and the predicted confidence information.

In a further embodiment, the method comprises automatically determining and analyzing a feature ranking. For example, the method comprises automatically determining a feature ranking, which provides insights into the importance of input features with respect to a current prediction of values of the input parameters. For example, this information can be used to explain unusual outputs and detect implausible input values (e.g. besides the confidence metric strategy).

In a further embodiment, the 3D model is provided as a 3D cylindrical model by a parametrization of a tube-internal centerline of the tube part and an associated sheath surface. In other words, the tube-internal centerline follows a trajectory of the tube part and thus defines the curvature (the bending positions) of the tube part, wherein the sheath surface defines parameters regarding the shape of the lateral surface and tube diameter. In this embodiment, the comparison between the measured and the target values of the bending parameters comprises determining a deviation of the 3D cylindrical model, e.g. of the centerline and/or the sheath surface, with a further (e.g. reference) 3D cylindrical model of the tube part. The further 3D cylindrical model is determined from the target values of the bending parameters for the reference tube bending process and, similarly to the 3D cylindrical model determined from the 3D measurement data, is provided by a parametrization of a tube-internal centerline of the tube part, which follows a trajectory of the tube part, and an associated sheath surface.

In particular, the method further comprises determining the further 3D cylindrical model from the target values of the bending parameters.

In a further embodiment, the method comprises a determining of updated values for the input parameters for the reference tube bending process. The updated values are provided such that a mapping by the mapping model of the updated values onto corresponding calculated values of the bending parameters for the reference tube bending process indicates a minimization of a deviation of the calculated values from the target values of the bending parameters for the reference tube bending process.

In a further embodiment, the method comprises real-time acquisition of the 3D measurement data during an on-going tube bending process and the determining of the updated values is carried out during the on-going tube bending process for providing the updated values in real time. For example, the updated values are automatically applied on at least one of the input parameters during the on-going tube bending process.

By way of example, once fitted to the bending processing data and the comparison, the mapping model is deployed to a bending machine software and is embedded into the processing pipeline. Prior to every bending procedure (or continuously) the mapping model is fed with current normalized input features and the suggested machine input parameters are output, wherein the machine is adapted accordingly in either a fully automated or human-in-the-loop process. For example, the operator needs to confirm predictions of the machine learning based mapping model before bending further parts.

For example, in an exemplary implementation of the inventive method a neural network is trained on the tube bending machine processing data, thereby implicitly learning the different physical effects at play (such as springback and degradation) as well as the material-specific or geometry-specific behaviors, thus allowing a real-time update of the machine parameters without the need to bend a tube first. The dense neural network performs a regression task by mapping its input features such as desired geometry, material information and potentially machine-specific information to continuous correction values. It is trained using a gradient backpropagation algorithm in order to update its parameters when iteratively being presented with subsets of data samples from the training data. For example, during the training process, the machine learning process learns a representation of the complex non-linear relationship between input features and machining parameters in a data-driven manner from the large database of previous bending processes by feeding the data through multiple neural network layers, increasing the representational capability and learning more abstract characteristics as opposed to carefully hand-crafting useful input features in case of classic machine learning algorithms such as multiple ridge regression etc. Training can be stopped once a chosen distance metric, e.g. mean squared or mean absolute error between the target tube geometry and the predicted tube geometry, has converged to a sufficiently small value. Alternatively, the confidence value can be used as a loss function to guide training process. This allows for a simultaneous learning of both the prediction of correction parameters themselves and their covariance values.

Using a method according to one of the above-described embodiments allows, for example, to consider machine wear, e.g. wherein the machine learning process is configured to take into account a number of bending processes carried out before the replacing of relevant bending machine wear parts.

For example, machine wear is described by counting the number of bent parts since last replacement of each relevant part. The machine wear can also be modelled explicitly by using a predefined or learned Remaining Useful Life (RUL) function for each part known to affect bending quality sooner or later. Using or learning a non-linear RUL function means that non-linear effects such as the rapid initial part wear and failure behavior can be modelled instead of describing the machine wear with a completely uniform wear rate up to failure from beginning to end.

Using tube bending machine processing data from previous tube bending processes in combination with such a data-driven approach, wherein a machine learning based model is trained to learn how to correct the tube bending parameters allows to provide sped-up and less cumbersome determination (e.g. less time and effort and fewer waste parts) of input parameters while still providing tube bending where the first try is either in tolerance or has lower error than with previous methods. Such a model is data-driven in the sense that it has learned a mapping from input features such as material information, tube geometry, machine degradation/usage etc. to bending machine corrections given past observations / data samples.

By way of example, under the assumption that a new input fits the training (or validation) data distribution, the machine learning process allows to take into account a new configuration (e.g. a new target tube geometry, new material information, different inner and outer tube diameter, and potentially machine specific information) to predict a correction to be applied from the first bending procedure onwards, such that the error from the first part on is reduced. Ideally, a part in tolerance is achieved on first try. For example, the machine learning process iteratively takes the newly acquired data sample(s) into account and updates or provides adapted suggestions for the mapping model in case the first bent part was still out of tolerance.

For example, tube geometry and potentially further features are provided as input, for which the confidence metric is computed. The confidence metric describes how well the input fits the training data distribution. For this approach, the machine learning process predicts an additional output parameter representing the estimated error of the mapping model, e.g. in terms of a standard deviation or variance. By way of example, the mapping model is trained by using a Gaussian maximum likelihood loss function.

In particular, the machine learning process is configured to predict corrections for the currently applied values of the tube bending machine input parameters and their covariance matrix.

By way of example, a control measurement is often applied according to a pre-defined monitoring scheme, e.g. after every single part (100% control), at regular intervals (every 100th part, every hour etc.), on batch change-overs or on set-up process. In case of less than 100% part measurement coverage, the measurement device for the control measurement can be shared among multiple bending machines.

Such a pre-defined monitoring scheme may be improved by the inventive method, e.g. wherein a comprehensive control measurement of the bent tube, e.g. by using an optical measurement device of choice, is triggered automatically in case a confidence value or a particular combination of confidence values falls below a previously determined threshold criterion. In case the measured actual values indicate that the bent tube is out of tolerance, the additionally collected data can be fed back and the model can be adapted. An adjustment is then carried out automatically and/or the machine operator is alerted, warned and provided with a suggestion to change the settings.

Once a tube is bent and still out of tolerance, the machine learning process can in a modification consider the obtained geometry and use this to further adapt the mapping model on the fly and provide improved predictions. This could be performed in an iterative fashion until the part eventually achieves an in-tolerance state.

The invention further relates to a use of a mapping model, which provides a mapping of bending parameters defining a target tube bending geometry to input parameters defining processing steps of a tube bending machine, so as to determine values of the input parameters for the tube bending machine, wherein the mapping model has been trained according to one of the embodiments of the method described above.

The invention further relates to a system for tube bending, comprising a tube bending machine, configured to carry out a tube bending process as a function of input parameters defining processing steps of the tube bending machine. The system is configured to determine values of the input parameters based on a mapping model providing a mapping of bending parameters defining a target tube bending geometry to the input parameters, which mapping model has been trained according to one of the embodiments of the method described above.

In particular, the system is configured to carry out the steps of the method according to one of the embodiments described above in order to determine the mapping of the bending parameters to the input parameters. The system comprises a computing unit configured to access tube bending machine processing data, e.g. from the tube bending machine of the system or from other tube bending machines. The computing unit comprises a machine learning algorithm configured to provide for the step of training the mapping model according to one of the embodiments of the method described above.

By using a machine learning algorithm for fitting a mapping model on past data samples, e.g. solely on past data samples without analytical knowledge of the bending physics and machine parameters, an implicit understanding on the relevancy of certain bending features and their relationship to the correction parameters are learned. Thus, the machine learning process is inherently learning the physics of the tube bending.

Having learned a bending behavior of one machine, the mapping model can be used to improve setting up the one machine and/or the mapping model can be used for transfer learning to quickly adjust a mapping of bending parameters to input parameters of another type of bending machine by essentially re-using most of the learned model, e.g. by only retraining one or few layers of a neural network with few samples executed on the new machine. Essentially, this would allow generating a library of machine-specific adjustment procedures.

In a further embodiment, the system comprises a coordinate measuring device, e.g. an optical coordinate measuring device, configured to generate 3D measurement data, e.g. camera data configured to generate data for photogrammetric analysis, to provide for determining a 3D model of a tube part resulting from the tube bending process. For example, the optical coordinate measuring device is embodied as an all-in-one turnkey measurement cell specially developed for the efficient quality control of bent tubes and wires.

The invention further relates to a computer program product comprising program code which is stored on a machine-readable medium, or being embodied by an electromagnetic wave comprising a program code segment, and having computer-executable instructions for performing, e.g. when run on a computing unit of a system according to one of the embodiments described above, the following steps for determining a mapping of bending parameters defining a target tube bending geometry of a tube bending process to tube bending machine input parameters defining tube bending machine processing steps, so as to achieve the target tube bending geometry:
accessing or generating tube bending machine processing data underlying a reference tube bending process, particularly a currently ongoing or previous tube bending process, wherein the tube bending machine processing data comprise target values of the bending parameters for the reference tube bending process and corresponding used values for the input parameters;
accessing 3D measurement data of a measured tube bending geometry of a tube part resulting from carrying out the reference tube bending process and determining a 3D model of the tube part;
determining values of the bending parameters of the tube part from the 3D model and carrying out a comparison between the measured and the target values of the bending parameters with regard to achieving the target values within a defined target tolerance; and
training a mapping model, which provides a mapping of the input parameters to the bending parameters, wherein the mapping model is trained by a machine learning process, which takes into account the comparison, particularly wherein the machine learning process is configured for providing the comparison.

In particular, the program code comprises computer-executable instructions for performing any step in the training of the mapping model according to one of the embodiments of the method described above.

The system, method, and computer program product according to the different aspects of the invention are described or explained in more detail below, purely by way of example, with reference to working examples shown schematically in the drawing. Identical elements are labelled with the same reference numerals in the figures. The described embodiments are generally not shown true to scale and they are also not to be interpreted as limiting the invention. Specifically,

- Fig. 1:: an exemplary definition of bending parameters defining a target tube bending geometry of a tube bending process;
- Fig. 2:: an exemplary embodiment of the inventive method; and
- Fig. 3:: a further embodiment of the inventive method, which implements a so-called one-shot-learning approach.

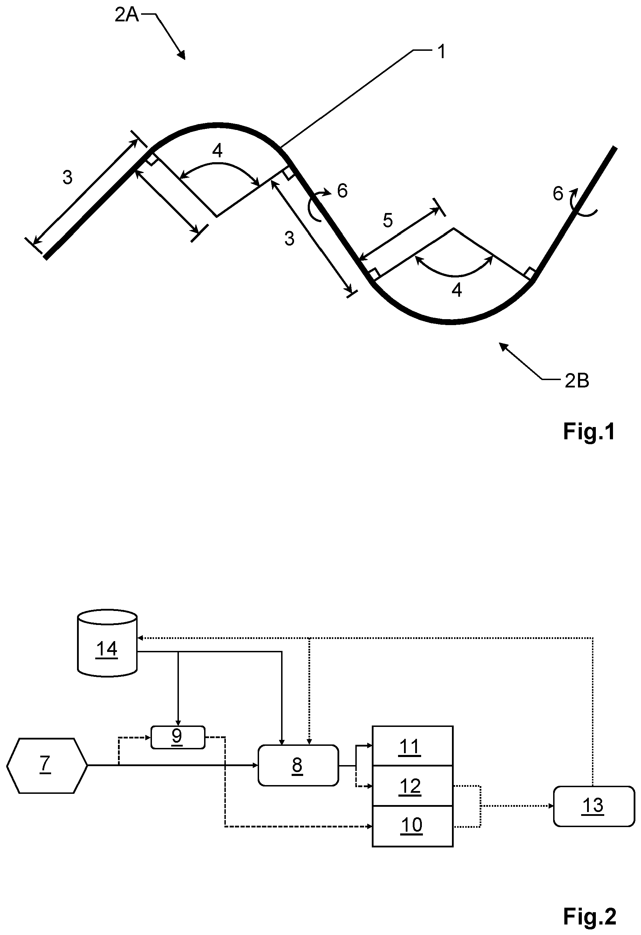

**Figure 1** shows an exemplary definition of bending parameters defining a target tube bending geometry of a bent tube 1 after a tube bending process, wherein the target tube bending geometry is defined by a series of Bending Elements 2A, 2B, each described with so-called PBRR parameters: Push 3, Bend 4, Radius 5, and Rotate 6. The typical units are [mm], [rad], [mm] and [rad] respectively. These PBRRs describe the manufacturing process. From the starting point of the tube to the first bending element, the tube gets pushed a certain amount such that the machine then can bend the tube at the desired point by the desired amount. The radius of the formed bend is defined by the tool mounted on the bending machine. Once the element is bent, the tube might need to be rotated if the next bending element has a different orientation than the previous one. Push values can vary a lot depending on the use-case; bending is obviously less than 180°, wherein values usually span the complete range from zero to 180 degrees; and rotation happens in the range +-/180°.

The radius parameter 5 is also referred to as the center-line radius (distance from the center of the tube curvature to the centerline (axis) of the tube). For example, it may be equal to the radius of the die. Hollow tubes are also often characterized by the so-called outside diameter, which is the distance between two points on the outermost edges of the tube's cross-section which passes through the centerline. Similarly, the so-called inside diameter is the distance of the innermost edges of the tube's cross-section which passes through the centerline. Wall thickness is the difference between the outside and inside diameters. In many cases, the outside diameter and the wall thickness are critical for the selection of the appropriate die for a tube bending process.

Each bending element geometry specified by PBRR may be referred to in three different ways, namely with respect to the target geometry, the machine geometry which describes the bending parameters the machine uses, and the measured or actual geometry, i.e. the actual measured tube geometry after bending. This measured actual geometry needs to be within a certain tolerance of the desired geometry. A typical criterion used is checking the deviations between nominal and actual data at the tangent points of the tube (start/end points of the bends). For example, this criterion corresponds to placing the tube into a mechanical gauge. Tolerances vary but are usually smaller than a few millimeters. Checking deviations at tangent points requires an alignment of the measured geometry against the nominal data and cannot be done with the measured data alone. Another common criterion is measuring the rolled-out tube length and the end-to-end distance. Again, tolerances vary with the use case.

**Figure 2** exemplarily depicts how the system can be trained and used in production. Data regarding a new part to be bent 7 are fed to a machine learning model 8. The data are provided as queries by bending element (e.g. of a series of bending elements), each specified by PBRR parameters. An input range check 9 is used for checking if a new sample is consistent with the purpose of the ML model 8.

The input range check 9 could (e.g. fully or in part) be integrated into the ML model 8 or reuse parts of the ML-model 8. For simplicity, it is sketched as a dedicated module, which provides a confidence metric 10. The confidence metric 10 describes how well the input fits the training data distribution.

For example, the input range check 9 uses simple statistics calculated on the training data set and checks if the new sample falls within that distribution. It could be as fancy as using an embedding obtained by a neural network and measuring distances within that embedding. Alternatively, a clustering could be applied on this embedding. When using a neural network, there are many ways to determine if a new sample falls inside the generalization envelope, e.g. as described by J. Lust and A. P. Condurache, 2021 ("A Survey on Assessing the Generalization Envelope of Deep Neural Networks: Predictive Uncertainty, Out-of-distribution and Adversarial Samples", https://arxiv.org/pdf/2008.09381.pdf).

The ML model 8 provides predicted correction values 11 for the input parameters of the tube bending process and a predicted confidence value (covariance) 12 of the predicted correction values 11.

Using both the predicted confidence values 12 and the confidence metric 10 it is decided when and if to carry out a coordinate measurement 13 to generate 3D measurement data of the tube bending geometry of the bent part. Whenever confidence values are too low, it is decided to measure the part, hence, alerting the operator and triggering a new measuring process. The 3D measurement data are fed back to improve the ML model 8. In addition the data are fed to a database comprising a history 14 of previous tube bending processes, which comprises tube bending machine processing data of previous tube bending processes and data based on the 3D measurement data, e.g. the 3D measurement data and/or comparison data of target and measured values of previous tube bending parameters. The history is used to train/validate the ML model 8 (e.g. including the input range check 9).

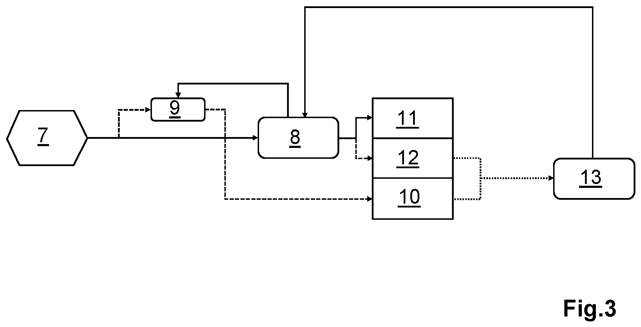

**Figure 3** exemplarily depicts an embodiment of the system, which implements a so-called one-shot-learning approach. The system is in large parts similar to the embodiment of Fig. 2. However, here the ML model 8 is trained/generated without the need to store the actual 3D measurement data and/or comparison data of target and measured values of previous tube bending parameters. Instead, an online-learning approach is used, where the data are used but the ML model is generated from and learned incrementally with every new data sample.

Although the invention is illustrated above, partly with reference to some preferred embodiments, it must be understood that numerous modifications and combinations of different features of the embodiments can be made, within the scope of the appended claims, which define the invention.

## Claims

1. Computer implemented method for determining a mapping of bending parameters (3, 4, 5, 6) defining a target tube bending geometry of a tube bending process to tube bending machine input parameters defining tube bending machine processing steps, so as to achieve the target tube bending geometry, wherein the method comprises
• generating tube bending machine processing data (14) underlying a reference tube bending process, wherein the tube bending machine processing data (14) comprise target values of the bending parameters (3, 4, 5, 6) for the reference tube bending process and corresponding used values for the input parameters,
• using 3D measurement data (13) of a measured tube bending geometry of a tube part resulting from carrying out the reference tube bending process for determining a 3D model of the tube part,
• determining measured values of the bending parameters (3, 4, 5, 6) of the tube part from the 3D model and carrying out a comparison between the measured and the target values of the bending parameters (3, 4, 5, 6) with regard to achieving the target values within a defined target tolerance, and
• training a mapping model, which provides a mapping of the input parameters to the bending parameters (3, 4, 5, 6), wherein the mapping model is trained by a machine learning process (8), which takes into account the comparison.

2. Method according to claim 1, wherein the method further comprises
• analyzing the tube bending machine processing data for providing a confidence metric (10), which describes how well the tube bending machine processing data fit a training data distribution underlying the mapping model, and
• the machine learning process (8) being configured to provide a predicted correction value (11) for at least one of the parameters and a corresponding predicted confidence information (12) of the predicted correction value (11),
wherein the using of the 3D measurement data (13) for the determining of the 3D model of the tube part, the determining of the measured values of the bending parameters (3, 4, 5, 6) and the carrying out of the comparison between the measured and the target values of the bending parameters (3, 4, 5, 6), and the training of the mapping model are carried out as a function of a threshold criterion taking into account the confidence metric (10) and the predicted confidence information (12).

3. Method according to one of the preceding claims, wherein the 3D model is provided as a 3D cylindrical model by a parametrization of a tube-internal centerline of the tube part, which follows a trajectory of the tube part, and an associated sheath surface, wherein the comparison between the measured and the target values of the bending parameters (3, 4, 5, 6) comprises determining a deviation of the 3D cylindrical model with a further 3D cylindrical model of the tube part determined from the target values of the bending parameters (3, 4, 5, 6) for the reference tube bending process and being provided by a parametrization of a tube-internal centerline of the tube part, which follows a trajectory of the tube part, and an associated sheath surface.

4. Method according to one of the preceding claims, wherein the method comprises a determining of updated values for the input parameters for the reference tube bending process, wherein the updated values are provided such that a mapping by the mapping model of the updated values onto corresponding calculated values of the bending parameters (3, 4, 5, 6) for the reference tube bending process indicates a minimization of a deviation of the calculated values from the target values of the bending parameters (3, 4, 5, 6) for the reference tube bending process.

5. Method according to 4, wherein the method comprises real-time acquisition of the 3D measurement data (13) during an on-going tube bending process and the determining of the updated values is carried out during the on-going tube bending process for providing the updated values in real time, wherein the updated values are automatically applied on at least one of the input parameters during the on-going tube bending process.

6. Method according to one of the preceding claims, wherein the method comprises
• storing a history (14) of tube bending machine processing data from previous tube bending processes executed over a period of time, wherein the history (14) comprises
∘ previous values of the bending parameters (3, 4, 5, 6) for the previous tube bending processes and corresponding previous values of the input parameters used to achieve respective target tube bending geometries corresponding to the previous values of the bending parameters (3, 4, 5, 6), and
∘ comparison information between the previous values of the bending parameters (3, 4, 5, 6) and measured actual values of the bending parameters (3, 4, 5, 6) resulting from the previous tube bending processes with regard to achieving the previous values of the bending parameters (3, 4, 5, 6) within defined target tolerances,
• using the history (14) for the training of the mapping model, wherein the machine learning process (8) is configured to take into account the history (14) to train the mapping model.

7. Method according to one of the preceding claims, wherein the bending parameters (3, 4, 5, 6) comprise a push (3), a bend (4), a rotate (6), and a radius (5) parameter, which parameters describe a bending element (2A, 2B) to be generated by the tube bending process, wherein
• the push parameter (3) indicates a distance between a process starting point to the bending element (2A, 2B) or a distance between the bending element (2A, 2B) and another bending element (2A, 2B) to be generated by the tube bending process,
• the bend parameter (4) indicates an angle of bend of the bending element (2A, 2B),
• the rotate parameter (6) indicates an orientation of the bending element (2A, 2B) with respect to another bending element (2A, 2B), and
• the radius parameter (5) indicates a bending radius of the bending element (2A, 2B).

8. Method according to one of the preceding claims, wherein the tube bending machine processing data comprise tube information on tube material and tube geometry of the tube part, and the machine learning process (8) is configured to take into account the tube information for the training of the mapping model.

9. Method according to claim 8, wherein the machine learning process (8) is configured to provide the training of the mapping model by taking into account the tube information by estimating continuous machining parameters of the reference tube bending process, for which the tube information is fed into a regression part of the machine learning process (8).

10. Use of a mapping model, which provides a mapping of bending parameters (3, 4, 5, 6) defining a target tube bending geometry to input parameters defining processing steps of a tube bending machine, so as to determine values of the input parameters for the tube bending machine, wherein the mapping model has been determined according to the method of one of claims 1 to 9.

11. System for tube bending, comprising a tube bending machine, configured to carry out a tube bending process as a function of input parameters defining processing steps of the tube bending machine,
**characterized in that**
the system is configured to determine values of the input parameters based on a mapping model providing a mapping of bending parameters (3, 4, 5, 6) defining a target tube bending geometry to the input parameters, which mapping model has been trained according to the method of one of claims 1 to 9.

12. System according to claim 11, wherein the system is configured to carry out the steps of the method according to one of claims 1 to 9 to determine the mapping of the bending parameters (3, 4, 5, 6) to the input parameters, wherein the system comprises a computing unit configured to access tube bending machine processing data and comprising a machine learning algorithm (8) configured to provide for the step of training the mapping model according to one of claims 1 to 9.

13. System according to one of claims 11 to 12, wherein the system comprises a coordinate measuring device, configured to generate 3D measurement data (13) to provide for determining a 3D model of a tube part resulting from the tube bending process.

14. Computer program product comprising program code which is stored on a machine-readable medium, or being embodied by an electromagnetic wave comprising a program code segment, and having computer-executable instructions for performing the following steps for determining a mapping of bending parameters (3, 4, 5, 6) defining a target tube bending geometry of a tube bending process to tube bending machine input parameters defining tube bending machine processing steps, so as to achieve the target tube bending geometry,
• accessing or generating tube bending machine processing data (14) underlying a reference tube bending process, wherein the tube bending machine processing data (14) comprise target values of the bending parameters (3, 4, 5, 6) for the reference tube bending process and corresponding used values for the input parameters,
• accessing 3D measurement data (13) of a measured tube bending geometry of a tube part resulting from carrying out the reference tube bending process and determining a 3D model of the tube part,
• determining values of the bending parameters (3, 4, 5, 6) of the tube part from the 3D model and carrying out a comparison between the measured and the target values of the bending parameters (3, 4, 5, 6) with regard to achieving the target values within a defined target tolerance, and
• training a mapping model, which provides a mapping of the input parameters to the bending parameters (3, 4, 5, 6), wherein the mapping model is trained by a machine learning process (8), which takes into account the comparison.

15. Computer program product according to claim 14, wherein the program code comprises computer-executable instructions for performing any step in the training of the mapping model according to one of claims 2 to 9.

## Patentansprüche

1. Computerimplementiertes Verfahren zum Bestimmen einer Abbildung von Biegeparametern (3, 4, 5, 6), die eine Sollrohrbiegeform eines Rohrbiegeprozesses definieren, auf Rohrbiegemaschineneingabeparameter, die Rohrbiegemaschinenverarbeitungsschritte definieren, um die Sollrohrbiegegeometrie zu erreichen, wobei das Verfahren umfasst
• Erzeugen von Rohrbiegemaschinenverarbeitungsdaten (14), die einem Referenzrohrbiegeprozess zugrunde liegen, wobei die Rohrbiegemaschinenverarbeitungsdaten (14) Sollwerte der Biegeparameter (3, 4, 5, 6) für den Referenzrohrbiegeprozess und entsprechende verwendete Werte für die Eingabeparameter umfassen,
• Verwenden von 3D-Messdaten (13) einer gemessenen Rohrbiegegeometrie eines Rohrteils, die aus dem Durchführen des Referenzrohrbiegeprozesses resultieren, zum Bestimmen eines 3D-Modells des Rohrteils,
• Bestimmen von gemessenen Werten der Biegeparameter (3, 4, 5, 6) des Rohrteils aus dem 3D-Modell und Durchführen eines Vergleichs zwischen den gemessenen Werten und den Sollwerten der Biegeparameter (3, 4, 5, 6) hinsichtlich des Erreichens der Sollwerte innerhalb einer definierten Solltoleranz und
• Trainieren eines Abbildungsmodells, das eine Abbildung der Eingabeparameter auf die Biegeparameter (3, 4, 5, 6) bereitstellt, wobei das Abbildungsmodell durch einen Maschinenlernprozess (8) trainiert wird, der den Vergleich berücksichtigt.

2. Verfahren nach Anspruch 1, wobei das Verfahren ferner umfasst
• Analysieren der Rohrbiegemaschinenverarbeitungsdaten, um eine Konfidenzmetrik (10) bereitzustellen, die beschreibt, wie gut die Rohrbiegemaschinenverarbeitungsdaten zu einer dem Abbildungsmodell zugrunde liegenden Trainingsdatenverteilung passen, und
• wobei der Maschinenlernprozess (8) eingerichtet ist, einen vorhergesagten Korrekturwert (11) für mindestens einen der Parameter und entsprechende vorhergesagte Konfidenzinformationen (12) des vorhergesagten Korrekturwerts (11) bereitzustellen,
wobei das Verwenden der 3D-Messdaten (13) zum Bestimmen des 3D-Modells des Rohrteils, das Bestimmen der gemessenen Werte der Biegeparameter (3, 4, 5, 6) und das Durchführen des Vergleichs zwischen den gemessenen Werten und den Sollwerten der Biegeparameter (3, 4, 5, 6) sowie das Trainieren des Abbildungsmodells als Funktion eines Schwellenwertkriteriums unter Berücksichtigung der Konfidenzmetrik (10) und der vorhergesagten Konfidenzinformationen (12) durchgeführt werden.

3. Verfahren nach einem der vorstehenden Ansprüche, wobei das 3D-Modell als 3D-Zylindermodell durch eine Parametrisierung einer rohrinternen Mittellinie des Rohrteils, die einer Bahn des Rohrteils folgt, und einer zugehörigen Mantelfläche bereitgestellt wird, wobei der Vergleich zwischen den gemessenen Werten und den Sollwerten der Biegeparameter (3, 4, 5, 6) das Bestimmen einer Abweichung des 3D-Zylindermodells mit einem weiteren 3D-Zylindermodell des Rohrteils umfasst, das von den Sollwerten der Biegeparameter (3, 4, 5, 6) für den Referenzrohrbiegeprozess bestimmt und durch eine Parametrisierung einer rohrinternen Mittellinie des Rohrteils, die einer Bahn des Rohrteils folgt, und einer zugehörigen Mantelfläche bereitgestellt wird.

4. Verfahren nach einem der vorstehenden Ansprüche, wobei das Verfahren ein Bestimmen aktualisierter Werte für die Eingabeparameter für den Referenzrohrbiegeprozess umfasst, wobei die aktualisierten Werte derart bereitgestellt werden, dass eine Abbildung der aktualisierten Werte durch das Abbildungsmodell auf entsprechende berechnete Werte der Biegeparameter (3, 4, 5, 6) für den Referenzrohrbiegeprozess eine Minimierung einer Abweichung der berechneten Werte von den Sollwerten der Biegeparameter (3, 4, 5, 6) für den Referenzrohrbiegeprozess anzeigt.

5. Verfahren nach Anspruch 4, wobei das Verfahren die Echtzeiterfassung der 3D-Messdaten (13) während eines laufenden Rohrbiegeprozesses umfasst und das Bestimmen der aktualisierten Werte während des laufenden Rohrbiegeprozesses durchgeführt wird, um die aktualisierten Werte in Echtzeit bereitzustellen, wobei die aktualisierten Werte automatisch auf mindestens einen der Eingabeparameter während des laufenden Rohrbiegeprozesses angewendet werden.

6. Verfahren nach einem der vorstehenden Ansprüche, wobei das Verfahren umfasst
• Speichern einer Historie (14) von Rohrbiegemaschinenverarbeitungsdaten von früheren Rohrbiegeprozessen, die über einen Zeitraum ausgeführt wurden, wobei die Historie (14) umfasst
∘ vorherige Werte der Biegeparameter (3, 4, 5, 6) für die vorherigen Rohrbiegeprozesse und entsprechende vorherige Werte der Eingabeparameter, die zum Erreichen von entsprechenden Sollrohrbiegegeometrien verwendet werden, die den vorherigen Werten der Biegeparameter (3, 4, 5, 6) entsprechen, und
∘ Vergleichsinformationen zwischen den vorherigen Werten der Biegeparameter (3, 4, 5, 6) und gemessenen Ist-Werten der Biegeparameter (3, 4, 5, 6), die aus den früheren Rohrbiegeprozessen resultieren, hinsichtlich des Erreichens der vorherigen Werte der Biegeparameter (3, 4, 5, 6) innerhalb definierter Solltoleranzen,
• Verwenden der Historie (14) für das Trainieren des Abbildungsmodells, wobei der Maschinenlernprozess (8) eingerichtet ist, die Historie (14) zu berücksichtigen, um das Abbildungsmodell zu trainieren.

7. Verfahren nach einem der vorstehenden Ansprüche, wobei die Biegeparameter (3, 4, 5, 6) einen Schub- (3), einen Biege- (4), einen Dreh- (6) und einen Radiusparameter (5) umfassen und die Parameter ein durch den Rohrbiegeprozess zu erzeugendes Biegeelement (2A, 2B) beschreiben, wobei
• der Schubparameter (3) einen Abstand zwischen einem Prozessstartpunkt und dem Biegeelement (2A, 2B) oder einen Abstand zwischen dem Biegeelement (2A, 2B) und einem anderen Biegeelement (2A, 2B) angibt, das durch den Rohrbiegeprozess erzeugt werden soll,
• der Biegeparameter (4) einen Biegewinkel des Biegeelements (2A, 2B) angibt,
• der Drehparameter (6) eine Ausrichtung des Biegeelements (2A, 2B) in Bezug auf ein anderes Biegeelement (2A, 2B) angibt und
• der Radiusparameter (5) einen Biegeradius des Biegeelements (2A, 2B) angibt.

8. Verfahren nach einem der vorstehenden Ansprüche, wobei die Rohrbiegemaschinenverarbeitungsdaten Rohrinformationen über Rohrmaterial und Rohrgeometrie des Rohrteils umfassen und der Maschinenlernprozess (8) eingerichtet ist, die Rohrinformationen für das Trainieren des Abbildungsmodells zu berücksichtigen.

9. Verfahren nach Anspruch 8, wobei der Maschinenlernprozess (8) eingerichtet ist, das Trainieren des Abbildungsmodells unter Berücksichtigung der Rohrinformationen durch Schätzen kontinuierlicher Bearbeitungsparameter des Referenzrohrbiegeprozesses, für den die Rohrinformationen in einen Regressionsteil des Maschinenlernprozesses (8) eingespeist werden, bereitzustellen.

10. Verwendung eines Abbildungsmodells, das eine Abbildung von Biegeparametern (3, 4, 5, 6), die eine Sollrohrbiegeform definieren, auf Eingabeparameter, die Verarbeitungsschritte einer Rohrbiegemaschine definieren, bereitstellt, um Werte der Eingabeparameter für die Rohrbiegemaschine zu bestimmen, wobei das Abbildungsmodell gemäß dem Verfahren nach einem der Ansprüche 1 bis 9 bestimmt wurde.

11. System zum Biegen von Rohren, das eine Rohrbiegemaschine umfasst, die eingerichtet ist, einen Rohrbiegeprozess als Funktion von Eingabeparametern durchzuführen, die Verarbeitungsschritte der Rohrbiegemaschine definieren,
**dadurch gekennzeichnet, dass**
das System eingerichtet ist, Werte der Eingabeparameter basierend auf einem Abbildungsmodell zu bestimmen, das eine Abbildung von Biegeparametern (3, 4, 5, 6), die eine Sollrohrbiegeformgeometrie definieren, auf die Eingabeparameter bereitstellt, wobei das Abbildungsmodell gemäß dem Verfahren nach einem der Ansprüche 1 bis 9 trainiert wurde.

12. System nach Anspruch 11, wobei das System eingerichtet ist, die Schritte des Verfahrens gemäß einem der Ansprüche 1 bis 9 durchzuführen, um die Abbildung der Biegeparameter (3, 4, 5, 6) auf die Eingabeparameter zu bestimmen, wobei das System eine Recheneinheit umfasst, die eingerichtet ist, auf Rohrbiegemaschinenverarbeitungsdaten zuzugreifen, und einen Maschinenlernen-Algorithmus (8) umfasst, der eingerichtet ist, den Schritt des Trainierens des Zuordnungsmodells nach einem der Ansprüche 1 bis 9 bereitzustellen.

13. System nach einem der Ansprüche 11 bis 12, wobei das System eine Koordinatenmessvorrichtung umfasst, die eingerichtet ist, 3D-Messdaten (13) zu erzeugen, um das Bestimmen eines 3D-Modells eines Rohrteils bereitzustellen, das aus dem Rohrbiegeprozess resultiert.

14. Computerprogrammprodukt, das Programmcode umfasst, der auf einem maschinenlesbaren Medium gespeichert ist, oder durch eine elektromagnetische Welle verkörpert ist, die ein Programmcodesegment umfasst, und computerausführbare Befehle aufweist, um die folgenden Schritte zum Bestimmen einer Abbildung von Biegeparametern (3, 4, 5, 6), die eine Sollrohrbiegeform eines Rohrbiegeprozesses definieren, auf Rohrbiegemaschineneingabeparameter, die Rohrbiegemaschinenverarbeitungsschritte definieren, auszuführen, um die Sollrohrbiegeform zu erreichen,
• Zugreifen auf oder Erzeugen von Rohrbiegemaschinenverarbeitungsdaten (14), die einem Referenzrohrbiegeprozess zugrunde liegen, wobei die Rohrbiegemaschinenverarbeitungsdaten (14) Sollwerte der Biegeparameter (3, 4, 5, 6) für den Referenzrohrbiegeprozess und entsprechende verwendete Werte für die Eingabeparameter umfassen,
• Zugreifen auf 3D-Messdaten (13) einer gemessenen Rohrbiegegeometrie eines Rohrteils, die aus dem Durchführen des Referenzrohrbiegeprozesses resultieren, und Bestimmen eines 3D-Modells des Rohrteils,
• Bestimmen von Werten der Biegeparameter (3, 4, 5, 6) des Rohrteils aus dem 3D-Modell und Durchführen eines Vergleichs zwischen den gemessenen Werten und den Sollwerten der Biegeparameter (3, 4, 5, 6) hinsichtlich des Erreichens der Sollwerte innerhalb einer definierten Solltoleranz und
• Trainieren eines Abbildungsmodells, das eine Abbildung der Eingabeparameter auf die Biegeparameter (3, 4, 5, 6) bereitstellt, wobei das Abbildungsmodell durch einen Maschinenlernprozess (8) trainiert wird, der den Vergleich berücksichtigt.

15. Computerprogrammprodukt nach Anspruch 14, wobei der Programmcode computerausführbare Befehle zum Ausführen eines beliebigen Schritts beim Trainieren des Abbildungsmodells nach einem der Ansprüche 2 bis 9 umfasst.

## Revendications

1. Procédé implémenté par ordinateur pour déterminer un mappage de paramètres de cintrage (3, 4, 5, 6) définissant une géométrie de cintrage de tubes cible d'un processus de cintrage de tubes sur des paramètres d'entrée d'une machine à cintrer les tubes définissant des étapes de traitement de machine à cintrer les tubes, de façon à obtenir la géométrie de cintrage de tubes cible,
dans lequel le procédé comprend
• la génération de données de traitement de machine à cintrer les tubes (14) sous-jacentes à un processus de cintrage de tubes de référence, dans lequel les données de traitement de machine à cintrer les tubes (14) comprennent des valeurs cibles des paramètres de cintrage (3, 4, 5, 6) pour le processus de cintrage de tubes de référence et des valeurs utilisées correspondantes pour les paramètres d'entrée,
• l'utilisation de données de mesure 3D (13) d'une géométrie de cintrage de tubes mesurée d'une partie de tube résultant de la réalisation du processus de cintrage de tubes de référence pour déterminer un modèle 3D de la partie de tube,
• la détermination de valeurs mesurées des paramètres de cintrage (3, 4, 5, 6) de la partie de tube à partir du modèle 3D et la réalisation d'une comparaison entre les valeurs mesurées et les valeurs cibles des paramètres de cintrage (3, 4, 5, 6) en ce qui concerne l'obtention des valeurs cibles au sein d'une tolérance cible définie, et
• l'entraînement d'un modèle de mappage, qui fournit un mappage des paramètres d'entrée sur les paramètres de cintrage (3, 4, 5, 6), dans lequel le modèle de mappage est entraîné par un processus d'apprentissage automatique (8), qui prend en compte la comparaison.

2. Procédé selon la revendication 1, dans lequel le procédé comprend en outre
• l'analyse des données de traitement de machine à cintrer les tubes pour fournir une métrique de confiance (10) qui décrit à quel point les données de traitement de machine à cintrer les tubes s'adaptent à une distribution de données d'entraînement sous-jacente au modèle de mappage, et
• le processus d'apprentissage automatique (8) étant configuré pour fournir une valeur de correction prédite (11) pour au moins un parmi les paramètres et une information de confiance prédite (12) correspondante de la valeur de correction prédite (11),
dans lequel l'utilisation des données de mesure 3D (13) pour la détermination du modèle 3D de la partie de tube, la détermination des valeurs mesurées des paramètres de cintrage (3, 4, 5, 6) et la réalisation de la comparaison entre les valeurs mesurées et les valeurs cibles des paramètres de cintrage (3, 4, 5, 6), et l'entraînement du modèle de mappage sont réalisés en fonction d'un critère de seuil tenant compte de la métrique de confiance (10) et de l'information de confiance prédite (12).

3. Procédé selon l'une des revendications précédentes, dans lequel le modèle 3D est fourni sous forme d'un modèle cylindrique 3D par une paramétrisation d'une ligne centrale intérieure au tube de la partie de tube, qui suit une trajectoire de la partie de tube, et d'une surface de gaine associée, dans lequel la comparaison entre les valeurs mesurées et les valeurs cibles des paramètres de cintrage (3, 4, 5, 6) comprend la détermination d'un écart entre le modèle cylindrique 3D et un modèle cylindrique 3D supplémentaire de la partie de tube déterminé à partir des valeurs cibles des paramètres de cintrage (3, 4, 5, 6) pour le processus de cintrage de tubes de référence et fourni par une paramétrisation d'une ligne médiane intérieure au tube de la partie de tube, qui suit une trajectoire de la partie de tube, et d'une surface de gaine associée.

4. Procédé selon l'une des revendications précédentes, dans lequel le procédé comprend une détermination de valeurs actualisées pour les paramètres d'entrée pour le processus de cintrage de tube de référence, dans lequel les valeurs actualisées sont fournies de telle sorte qu'un mappage par le modèle de mappage des valeurs actualisées sur des valeurs calculées correspondantes des paramètres de cintrage (3, 4, 5, 6) pour le processus de cintrage de tubes de référence indique une minimisation d'un écart des valeurs calculées par rapport aux valeurs cibles des paramètres de cintrage (3, 4, 5, 6) pour le processus de cintrage de tubes de référence.

5. Procédé selon la revendication 4, dans lequel le procédé comprend l'acquisition en temps réel des données de mesure 3D (13) pendant un processus de cintrage de tubes en cours et la détermination des valeurs actualisées est réalisée pendant le processus de cintrage de tubes en cours afin de fournir les valeurs actualisées en temps réel,
dans lequel les valeurs actualisées sont automatiquement appliquées à au moins l'un des paramètres d'entrée pendant le processus de cintrage de tubes en cours.

6. Procédé selon l'une des revendications précédentes, dans lequel le procédé comprend
• le stockage d'un historique (14) de données de traitement de machine à cintrer les tubes provenant de processus précédents de cintrage de tubes exécutés sur une période de temps,
dans lequel l'historique (14) comprend
∘ des valeurs précédentes des paramètres de cintrage (3, 4, 5, 6) pour les précédents processus de cintrage de tubes et des valeurs précédentes correspondantes des paramètres d'entrée utilisés pour obtenir des géométries de cintrage de tubes cibles respectives correspondant aux valeurs précédentes des paramètres de cintrage (3, 4, 5, 6), et
∘ une information de comparaison entre les valeurs précédentes des paramètres de cintrage (3, 4, 5, 6) et les valeurs réelles mesurées des paramètres de cintrage (3, 4, 5, 6) résultant des traitements précédents de cintrage de tubes en ce qui concerne l'obtention des valeurs précédentes des paramètres de cintrage (3, 4, 5, 6) au sein de tolérances cibles définies,
• l'utilisation de l'historique (14) pour l'entraînement du modèle de mappage, dans lequel le processus d'apprentissage automatique (8) est configuré pour prendre en compte l'historique (14) afin d'entraîner le modèle de mappage.

7. Procédé selon l'une des revendications précédentes, dans lequel les paramètres de cintrage (3, 4, 5, 6) comprennent un paramètre de poussée (3), un paramètre de cintrage (4), un paramètre de rotation (6) et un paramètre de rayon (5), lesquels paramètres décrivent un élément de cintrage (2A, 2B) à générer par le processus de cintrage de tubes, dans lequel
• le paramètre de poussée (3) indique une distance entre un point de départ de processus et l'élément de cintrage (2A, 2B) ou une distance entre l'élément de cintrage (2A, 2B) et un autre élément de cintrage (2A, 2B) à générer par le processus de cintrage de tubes,
• le paramètre de cintrage (4) indique un angle de cintrage de l'élément de cintrage (2A, 2B),
• le paramètre de rotation (6) indique une orientation de l'élément de cintrage (2A, 2B) par rapport à un autre élément de cintrage (2A, 2B), et
• le paramètre de rayon (5) indique un rayon de cintrage de l'élément de cintrage (2A, 2B).

8. Procédé selon l'une des revendications précédentes, dans lequel les données de traitement de machine à cintrer les tubes comprennent une information de tube sur le matériau et la géométrie de tube de la partie de tube, et le processus d'apprentissage automatique (8) est configuré pour prendre en compte l'information de tube pour l'entraînement du modèle de mappage.

9. Procédé selon la revendication 8, dans lequel le processus d'apprentissage automatique (8) est configuré pour fournir l'entraînement du modèle de mappage en tenant compte de l'information de tube en estimant des paramètres d'usinage en continu du processus de cintrage de tubes de référence, pour lequel l'information de tube est introduite dans une partie de régression du processus d'apprentissage automatique (8).

10. Utilisation d'un modèle de mappage, qui fournit un mappage de paramètres de cintrage (3, 4, 5, 6) définissant une géométrie de cintrage de tubes cible sur des paramètres d'entrée définissant des étapes de traitement d'une machine à cintrer les tubes, de façon à déterminer des valeurs des paramètres d'entrée pour la machine à cintrer les tubes, dans lequel le modèle de mappage a été déterminé selon le procédé de l'une des revendications 1 à 9.

11. Système de cintrage de tubes, comprenant une machine à cintrer les tubes, configurée pour réaliser un processus de cintrage de tubes en fonction de paramètres d'entrée définissant des étapes de traitement de la machine à cintrer les tubes,
**caractérisé en ce que**
le système est configuré pour déterminer des valeurs des paramètres d'entrée sur la base d'un modèle de mappage fournissant un mappage de paramètres de cintrage (3, 4, 5, 6) définissant une géométrie de cintrage de tubes cible sur les paramètres d'entrée, lequel modèle de mappage a été entraîné selon le procédé de l'une des revendications 1 à 9.

12. Système selon la revendication 11, dans lequel le système est configuré pour réaliser les étapes du procédé selon l'une des revendications 1 à 9 afin de déterminer le mappage des paramètres de cintrage (3, 4, 5, 6) sur les paramètres d'entrée, dans lequel le système comprend une unité de calcul configurée pour accéder aux données de traitement de machine à cintrer les tubes et comprenant un algorithme d'apprentissage automatique (8) configuré pour fournir l'étape d'entraînement du modèle de mappage selon l'une des revendications 1 à 9.

13. Système selon l'une des revendications 11 et 12, dans lequel le système comprend un dispositif de mesure de coordonnées, configuré pour générer des données de mesure 3D (13) dans le but de déterminer un modèle 3D d'une partie de tube résultant du processus de cintrage de tubes.

14. Produit de programme d'ordinateur comprenant un code de programme qui est stocké sur un support lisible par machine, ou qui est incarné par une onde électromagnétique comprenant un segment de code de programme, et comportant des instructions exécutables par ordinateur pour effectuer les étapes suivantes afin de déterminer un mappage de paramètres de cintrage (3, 4, 5, 6) définissant une géométrie de cintrage de tubes cible d'un processus de cintrage de tubes sur des paramètres d'entrée de la machine à cintrer les tubes définissant des étapes de traitement de machine à cintrer les tubes, de façon à obtenir la géométrie de cintrage de tubes cible,
• le fait d'accéder à ou la génération de données de traitement de machine à cintrer les tubes (14) sous-jacentes à un processus de cintrage de tubes de référence, dans lequel les données de traitement de machine à cintrer les tubes (14) comprennent des valeurs cibles des paramètres de cintrage (3, 4, 5, 6) pour le processus de cintrage de tubes de référence et des valeurs utilisées correspondantes pour les paramètres d'entrée,
• le fait d'accéder aux données de mesure 3D (13) d'une géométrie de cintrage de tubes mesurée d'une partie de tube résultant de la réalisation du processus de cintrage de tubes de référence et la détermination d'un modèle 3D de la partie de tube,
• la détermination de valeurs des paramètres de cintrage (3, 4, 5, 6) de la partie de tube à partir du modèle 3D et la réalisation d'une comparaison entre les valeurs mesurées et les valeurs cibles des paramètres de cintrage (3, 4, 5, 6) en ce qui concerne l'obtention des valeurs cibles au sein d'une tolérance cible définie, et
• l'entraînement d'un modèle de mappage, qui fournit un mappage des paramètres d'entrée sur les paramètres de cintrage (3, 4, 5, 6), dans lequel le modèle de mappage est entraîné par un processus d'apprentissage automatique (8), qui prend en compte la comparaison.

15. Produit de programme d'ordinateur selon la revendication 14, dans lequel le code de programme comprend des instructions exécutables par ordinateur pour effectuer n'importe quelle étape lors de l'entraînement du modèle de mappage selon l'une des revendications 2 à 9.
